# EUROPÄISCHE PATENTANMELDUNG

(11) **EP 2 168 873 A2**
(43) Veröffentlichungstag der Anmeldung: **31.03.2010**
(21) Anmeldenummer: 09167165.1
(22) Anmeldetag: 04.08.2009
(51) Int. Cl.: B64F 1/36

(54) **System und Verfahren zur Gepäckausgabe**

(30) Priorität: 24.09.2008 DE 102008048741
(71) Anmelder: Siemens Aktiengesellschaft, 80333 München (DE)
(72) Erfinder: Klein, Cornel, 82041, Oberhaching (DE); Schöler, Thorsten, 87600, Kaufbeuren (DE); Wagner, Thomas, 91088, Bubenreuth (DE); Ziegler, Roland, 90768, Fürth (DE)

(57) **Zusammenfassung**

Die Erfindung schafft ein Gepäckausgabesystem (1) und ein Verfahren zum gezielten Ausgeben von Gepäckstücken (3). Dabei ist eine Gepäckausgabeeinrichtung (1A) zur Ausgabe von Gepäckstücken (3) an Personen (2) vorgesehen. Die Gepäckausgabeeinrichtung (1A) ist beispielsweise ein Gepäckförderband an einem Flughafen. Dort ist eine Lokalisierungsvorrichtung (1B) vorgesehen, welche Gepäckstücke (3) anhand eines daran jeweils angebrachten Tags (8) und ferner Personen (2) anhand mindestens eines der jeweiligen Person (2) zugeordneten Identifizierungsmerkmals lokalisiert. Die Lokalisierungseinrichtung (1B) steuert die Gepäckausgabeeinrichtung (1A) zur Zuführung des lokalisierten Gepäckstücks (3) zu der zugehörigen lokalisierten Person (2). Das Gepäckausgabesystem (1) erhöht den Komfort von Passagieren (2), da es lange Wartezeiten und ein Gedränge von Personen (2) an einem Gepäckförderband (aB) vermeidet. Darüber hinaus besteht die Möglichkeit, die Gepäckausgabe zu flexibilisieren. Das erfindungsgemäße Gepäckausgabesystem (1) eignet sich insbesondere zur Gepäckausgabe an Zielflughäfen, und für die Gepäckaufbewahrung an Bahnhöfen.

## Beschreibung

Die Erfindung betrifft ein System und ein Verfahren zur Gepäckausgabe, insbesondere über ein Gepäckförderband eines Flughafens.

Bei einem Transport oder bei einer Aufbewahrung von Gepäckstücken, die von ihren Besitzer getrennt werden, besteht die Notwendigkeit das Gepäckstück zu einem späteren Zeitpunkt dem jeweiligen Besitzer wieder zuzuführen.

Ein Flugpassagier, der ein Gepäckstück mit sich führt, gibt dieses Gepäckstück üblicherweise an einem Check-In-Schalter eines Abflughafens auf und holt das Gepäckstück nach Beendigung des Fluges an einem Gepäckförderband eines Ankunftsflughafens wieder ab. Das von dem Flugpassagier aufgegebene Gepäckstück wird im Abflugshafen mit einem Kennzeichnungsband, das beispielsweise einen Barcode enthält, zu seiner Identifizierung versehen und getrennt von dem Flugpassagier zu dem Zielflughafen befördert. Der Flugpassagier erhält über eine Anzeigeeinheit in einem Ankunftsbereich des Ankunftsflughafens einen Hinweis an welchem Gepäckförderband die Gepäckstücke seines Fluges ausgegeben werden. Der Flugpassagier wartet anschließend an dem Gepäckförderband auf sein Gepäckstück. Nachdem der Flugpassagier sein Gepäckstück visuell identifiziert hat nimmt er es von dem Gepäckförderband und verlässt damit den Ankunftsbereich des Zielflughafens.

Die herkömmliche Vorgehensweise zur Ausgabe von Gepäckstücken, beispielsweise an Flughäfen, weist einige erhebliche Nachteile auf. Ein Nutzer beziehungsweise ein Passagier muss zunächst an dem Ankunfts- bzw. Zielflughafen eine Anzeigeeinrichtung ausfindig machen, auf der angezeigt wird, wo die Gepäckstücke seines Fluges ausgegeben werden. Ein weiterer Nachteil besteht darin, dass die Wartezeit an einem Gepäckförderband bis das passende Gepäckstück ausgegeben ist, unter Umständen stark variieren und sehr lange dauern kann, da einerseits viele Gepäckstücke in einem Flugzeug transportiert werden können und ferner in vielen Flughäfen Gepäckstücke mehrerer Flüge an einem gemeinsamen Gepäckförderband ausgegebenen werden. Aufgrund der Vielzahl der Passagiere besteht daher an einem Gepäckförderband ein erhebliches Gedränge, was zusätzlich dadurch verstärkt wird, dass jeder Passagier ständig das Gepäckförderband im Blick haben möchte, um sein beziehungsweise seine Gepäckstücke zu identifizieren.

Ein weiterer Nachteil besteht darin, dass viele Gepäckstücke, beispielsweise schwarze Koffer, sich einander sehr ähnlich sehen können, sodass es für einen Passagier unter Umständen schwierig ist sein jeweiliges Gepäckstück zu identifizieren. Viele Passagiere versehen daher ihre Gepäckstücke mit zusätzlichen Erkennungsmerkmalen, wie beispielsweise Bändern oder dergleichen.

Während der zum Teil nicht unerheblichen Wartezeiten sind die von einem Flug bereits gestressten Passagiere zudem gezwungen ständig an dem Gepäckförderband nach ihren Gepäckstücken Aussicht zu halten. Daher kommt es auch oft vor, dass Gepäckstücke von einem Passagier nicht sofort erkannt sondern erst bei der nächsten oder weiteren Runden des umlaufenden Gepäckförderbandes erkannt werden.

Ein weiterer Nachteil der herkömmlichen Gepäckausgabesysteme besteht darin, das unbefugte Dritte ohne weiteres Gepäckstücke von einem Gepäckförderband entfernen können, ohne dass dies der berechtigte Passagier bemerken kann. Es ist daher relativ einfach Gepäckstücke von einem Gepäckstückförderband bei deren Ausgabe zu stehlen.

Ein weiterer Nachteil der herkömmlichen Gepäckausgabesysteme besteht darin, dass ein falsch verladenes oder versehentlich nicht abgeholtes Gepäckstück nur mit einem erheblichen logistischen Aufwand dem berechtigten Passagier wieder zugeführt werden kann.

Es ist daher eine Aufgabe der vorliegender Erfindung ein Gepäckausgabesystem und ein Verfahren zur Gepäckausgabe schaffen, das es erlaubt ein Gepäckstück einem Passagier gezielt zuzuführen.

Diese Aufgabe wird erfindungsgemäß durch ein Gepäckausgabesystem mit den im Patentanspruch 1 angegebenen Merkmalen gelöst.

Die Erfindung schafft ein Gepäckausgabesystem mit mindestens einer Gepäckausgabeeinrichtung zur Ausgabe von Gepäckstücken an Personen,
wobei eine Lokalisierungseinrichtung vorgesehen ist, welche Gepäckstücke anhand eines daran jeweils angebrachten Tags und Personen anhand mindestens eines der jeweiligen Personen zugeordneten Identifizierungsmerkmals lokalisiert, wobei die Lokalisierungseinrichtung die Gepäckausgabeeinrichtung zur Zuführung der lokalisierten Gepäckstücks zu einer zugehörigen lokalisierten Person steuert.

Bei einer Ausführungsform des erfindungsgemäßen Gepäcksausgabesystems leitet die Lokalisierungseinrichtung das Identifizierungsmerkmal einer Person aus einem von der Person mitgeführten Gerät ab.

Diese Ausführungsform bietet den Vorteil das keine biometrischen Daten von Personen zu deren Identifizierung benötigt werden. Die Identifizierung erfolgt anhand des mitgeführten Gerätes, sodass persönliche Daten der Person für die Identifizierung nicht benötigt und gespeichert werden.

Bei einer Ausführungsform des erfindungsgemäßen Gepäckausgabesystems ist das von der Person mitgeführte Gerät, von dem das Identifizierungsmerkmal der Person abgeleitet wird, ein mobiles Endgerät, beispielsweise ein mobiles Telefon.

Diese Ausführungsform bietet den Vorteil, dass die meisten Personen ein derartiges Gerät bereits mit sich führen.

Bei einer weiteren Ausführungsform des erfindungsgemäßen Gepäcksausgabesystems ist das von der Person mitgeführte Gerät eine elektronische Boardingkarte.

Dies bietet den Vorteil, dass an einem Flughafen bereits jeder Passagier eine Boardingkarte erhält, die zusätzlich für die Identifizierung und Lokalisierung des jeweiligen Passagiers angepasst werden kann.

Bei einer Ausführungsform des erfindungsgemäßen Gepäckausgabesystems ist das von der Person mitgeführte Gerät eine elektronische Boardingkarte, die ein aktives oder ein passives RFID-Tag aufweist.

Diese Ausführungsform bietet den Vorteil, dass FRIDRFID-Tag verlässlich arbeiten und eine Größe aufweisen, die es erlaubt sie in beliebigen Geräten, das heißt selbst in Boardingkarten, zu integrieren.

Bei einer Ausführungsform des erfindungsgemäßen Gepäckausgabesystems leitet die Lokalisierungseinrichtung das Identifizierungsmerkmal der Person nicht aus einem von der Person mitgeführten Gerät sondern von einem erfassten biometrischen Körpermerkmal der Person ab.

Diese Ausführungsform bietet den Vorteil, dass die Identifizierung und Lokalisierung einer Person besonders sicher ist.

Bei einer Ausführungsform des erfindungsgemäßen Gepäckausgabesystems ist das erfasste biometrische Körpermerkmal ein erfasster Fingerabdruck der Person.

Diese Ausführungsform bietet den Vorteil, dass Sensoren zum Erfassen von Fingerabdrücken bereits weiterverbreitet und technisch ausgereift sind.

Bei einer Ausführungsform des erfindungsgemäßen Gepäckausgabesystems tauscht die Lokalisierungseinrichtung über eine drahtlose Schnittstelle mit dem von der Person mitgeführten Gerät Nachrichten aus.

Dies bietet den Vorteil, dass eine Person mit der Lokalisierungseinrichtung interaktiv kommunizieren kann. Beispielsweise kann die Person an die Lokalisierungseinrichtung eine Anfrage richten, wann und wo sie das zugehörige Gepäckstück abholen kann.

Bei einer weiteren Ausführungsform des erfindungsgemäßen Gepäckausgabesystems wird der Person über eine Nutzerschnittstelle des mitgeführten Gerätes oder über eine Anzeige des Gepäckausgabesystems eine verbleibende Wartezeit bis zur Ausgabe eines zugehörigen Gepäckstücks und ein Ausgabeort des zughörigen Gepäckstücks mitgeteilt.

Diese Ausführungsform bietet den Vorteil, dass eine Person während der bleibenden Wartezeit für andere Tätigkeiten, beispielsweise Einkäufe oder sonstige Angelegenheiten, ausnützen kann. Darüber hinaus kann eine Person anhand des angegeben Ausgabeortes feststellen, ob dieser Ort weit entfernt ist und ob gegebenenfalls noch Zeit für andere Tätigkeiten besteht.

Bei einer Ausführungsform des erfindungsgemäßen Gepäckausgabesystems erhält die Gepäckausgabeeinrichtung die mit Tags versehen Gepäckstücke von einem Passagiertransportfahrzeug zum Transport von Personen und von Gepäckstücken.

Bei einer weiteren Ausführungsform des erfindungsgemäßen Gepäckausgabesystems erhält die Gepäckausgabeeinrichtung die mit Tags versehen Gepäckstücke von einer Gebäckaufbewahrungseinrichtung zur Aufbewahrung von Gepäckstücken.

Das erfindungsgemäße Gepäckausgabesystem ist sowohl in Flughäfen als auch in Zug- oder Bus-Bahnhöfen oder dergleichen einsetzbar.

Bei einer Ausführung des erfindungsgemäßen Gepäckausgabesystems ist die Gepäckausgabeeinrichtung ein Gepäckförderband.

Das erfindungsgemäße Gepäckausgabesystems eignet sich für Gepäckstücke, die durch ein Passagierflugzeug, durch einen Passagierzug, durch ein Passagierschiff oder durch einen Passagierbus transportiert werden.

Die Erfindung schafft ferner ein Verfahren zum gezielten Ausgeben eines Gepäckstückes mit den Schritten:
- Lokalisieren des auszugebenden Gepäckstücks anhand eines Tags, das an einem Gepäckstück angebracht ist;
- Lokalisierungen von einer Person anhand eines der jeweiligen Personen zugeordneten Identifizierungsmerkmals, und
- Zuführen des lokalisierten Gepäckstücks zu einer zu dem Gepäckstück zugehörigen lokalisierten Person.

Bei einer Ausführungsform des erfindungsgemäßen Verfahrens zur Ausgabe des Gepäckstückes werden diejenigen Personen innerhalb eines vorgegebenen Bereichs lokalisiert, die mit dem gleichen Passagier-Transportfahrzeug transportiert werden, wie das auszugebende Gepäckstück.

Bei einer Ausführungsform des erfindungsgemäßen Verfahrens wird das Identifizierungsmerkmal der Person aus zu einem von der Person mitgeführten Gerät abgeleitet.

Bei einer alternativen Ausführungsform des erfindungsgemäßen Verfahrens wird das Identifizierungsmerkmal der Person aus mindestens einem erfassten biometrischen Körpermerkmal der Person abgeleitet.

Die Erfindung schafft ferner ein Computerprogramm mit Programmbefehlen zur Durchführung eines Verfahrens zum gezielten Ausgeben eines Gepäckstückes mit den Schritten:
- Lokalisieren des auszugebenden Gepäckstücks anhand eines Tags, das an einem Gepäckstück angebracht ist;
- Lokalisierungen von einer Person anhand eines der jeweiligen Personen zugeordneten Identifizierungsmerkmals, und
- Zuführen des lokalisierten Gepäckstücks zu einer zu dem Gepäckstück zugehörigen lokalisierten Person.

Die Erfindung schafft ferner einen Datenträger, der ein derartiges Computerprogramm speichert.

Im Weiteren werden Ausführungsformen des erfindungsgemäßen Gepäckausgabesystems und des erfindungsgemäßen Verfahrens zur Ausgabe von Gepäckstücken unter Bezugnahme auf die beigefügten Figuren zur Erläuterung der Merkmale beschrieben.

Es zeigen:
- Figur 1: ein Blockschaltbild zur Darstellung eines Ausführungsbeispiels des erfindungsgemäßen Gepäckausgabesystems;
- Figur 2: eine abstrakte Darstellung des erfindungsgemäßen Gepäckausgabesystems;
- Figur 3: ein Ablaufdiagramm einer Ausführungsform des erfindungsgemäßen Verfahrens zum gezielten Ausgeben von Gepäckstücken;
- Figuren 4A, 4B, 4C: Ausführungsbeispiele zum Anbringen von Tags, die zum Lokalisieren von Gepäckstücken bei dem erfindungsgemäßen Gepäckausgabesystem verwendet werden können;
- Figuren 5A, 5B: Ausführungsvariante mit einem teilbaren Tag.

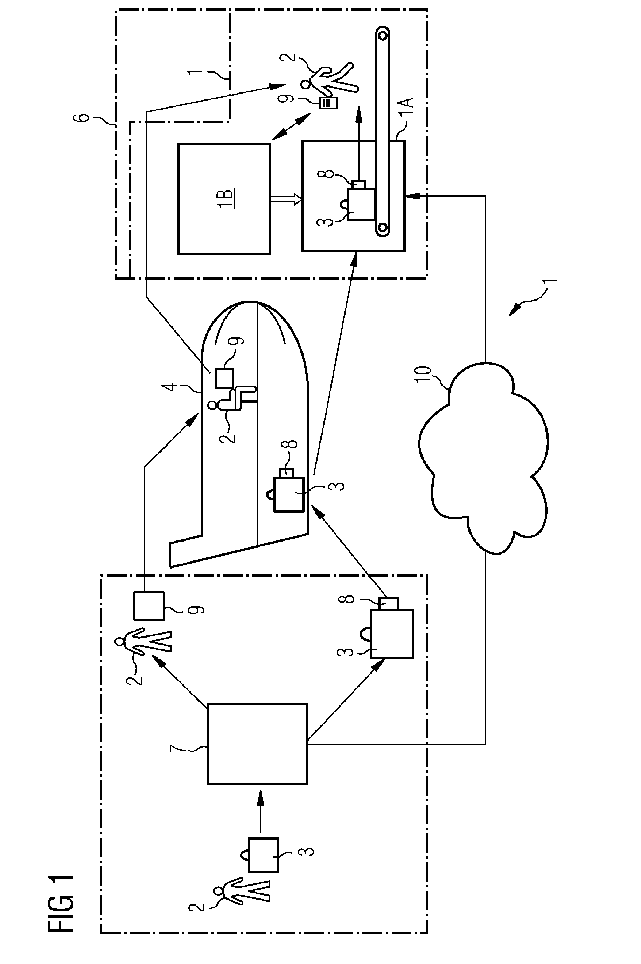

Figur 1 stellt ein Anwendungsbeispiel des erfindungsgemäßen Gepäckausgabesystems 1 dar. Bei dem in Figur 1 dargestellten Gepäckausgabesystem 1 handelt es sich um ein Gepäckausgabesystem eines Flughafens. Ein Passagier 2, der Gepäckstück 3 mit sich führt, fliegt mit einem Flugzeug 4 von einem Abflugflughafen 5 zu einem Ankunfts- bzw. Zielflughafen 6, in dem sich das erfindungsgemäße Gepäckausgabesystem 1 befindet. Der Passagier 2 begibt sich mit seinem Gepäckstück 3 zu einem Check-In-Schalter eines Check-In-Gepäckeingabesystems 7 innerhalb des Ablugflughafens 5. An einem Check-In-Schalter 7 wird das Gepäckstück 3 von dem Passagier 2 getrennt, der zudem eine Boardingkarte erhält. An das Gepäckstück 3 wird ein Tag 8 angebracht, welches eine Identifizierung des Gepäckstückes 3 und des zugehörigen Passagiers 2 erlaubt.

Die Zuordnung des Gepäckstückes 3 zu dem Passagier 2 kann auf verschiedene Weise erfolgen. Bei einer möglichen Ausführungsvariante erfolgt die Zuordnung mittels eines biometrischen Körpermerkmals der Person 2. Beispielsweise wird ein Fingerabdruck der Person 2 am Check-In 7 erfasst und zusammen mit persönlichen Daten des Passagiers 2, in dem Tag 8 des zugehörigen Gepäckstücks 3 gespeichert. Bei dieser Ausführungsform sind im Check-In-Bereich Sensoren zum Erfassen biometrischer Körpermerkmale des Passagiers 2 vorgesehen, beispielsweise ein Fingerabdruckscanner, ein Irisscanner oder sonstige Einrichtungen zum Erfassen biometrischer Körpermerkmale.

Bei einer alternativen Ausführungsform wird das Identifizierungsmerkmal zur Identifizierung des Passagiers 2 anhand eines von dem Passagier 2 mitgeführten Gerätes 9 abgeleitet. Bei diesem Gerät 9 kann es sich beispielsweise um eine elektronische Boardingkarte handeln, die ein aktives oder ein passives RFID-Tag enthält. Bei einer alternativen Ausführungsform kann es sich bei den mitgeführten Gerät 9 um ein mobiles Endgerät, z.B. ein mobiles Telefon des Passagiers 2, handeln. Bei dieser Ausführungsvariante wird eine Gerätenummer und/oder eine SIM-Kartennummer mit einer zugewiesenen ID-Nummer des Gepäckstücks 3 verknüpft und die verknüpften Daten werden anschließend in einem Speicherbereich des mitgeführten Gerätes 9 unverschlüsselt oder/und verschlüsselt abgelegt.

Die Person bzw. der Passagier 2 wird anschließend mit dem Gerät 9, beispielsweise der elektronischen Boardingkarte, und mit dem mit einem Tag 8 versehenen Gepäckstück 3 vorzugsweise mit dem gleichen Transportfahrzeug 4, beispielsweise einem Flugzeug, transportiert. In dem in Figur 1 dargestellten Ausführungsbeispiel fliegt das Flugzeug 4 von dem Abflughafen 5 zu dem Zielflughafen 6 an dem der Passagier 2 das Flugzeug 4 verlässt. An dem Zielflughafen 6 ist ein erfindungsgemäßes Gepäckausgabesystem 1 vorgesehen. Dieses enthält eine Gepäckausgabeeinrichtung 1A zur Ausgabe von Gepäckstücken 3 an Passagiere 2. Bei dieser Gepäckausgabeeinrichtung 1A handelt es sich beispielsweise um ein Gepäckförderband von dem die Personen oder Passagiere 2 das zugehörige Gepäckstück 3 nehmen können. Das Gepäckausgabesystems 1 enthält ferner eine Lokalisierungseinrichtung 1B, welche Gepäckstücke 3 anhand eines daran jeweils angebrachten Tags 8 und die Personen bzw. Passagiere 2 anhand mindestens eines der jeweiligen Person 2 zugeordneten Identifizierungsmerkmals lokalisiert. Bei dem Identifizierungsmerkmal kann es sich um ein am Abflughafen 5 erfasstes biometrische Körpermerkmal oder um ein von dem mitgeführten Gerät 9 abgeleitetes Identifizierungsmerkmal handeln. Die Lokalisierungseinrichtung 1B des Gepäckausgabesystems 1 steuert die Gepäckausgabeeinrichtung 1A für die gezielte Zuführung des lokalisierten Gepäckstücks 3 zu einer zugehörigen lokalisierten Person 2 an.

Bei einer möglichen Ausführung des erfindungsgemäßen Gepäckausgabesystems 1 begibt sich der Passagier 2 am Zielflughafen 6 zu einem beliebigen Gepäckförderband 1A und erhält automatisch über dieses Gepäckförderband 1A sein zugehöriges beziehungsweise seine zugehörigen Gepäckstücke 3. Dies bietet den Vorteil, dass die Person 2 an dem Zielflughafen 6 nicht ein bestimmtes Gepäckförderband aufsuchen muss. Diese Ausführungsform bietet zudem den Vorteil, dass an dem Zielflughafen 6 verschiedene Gepäckförderbänder gleichmäßig ausgelastet werden können.

Die Lokalisierungseinrichtung 1B kann bei einer Ausführungsform über eine drahtlose Schnittstelle mit dem von der Person 2 mitgeführten Gerät 9, d. h. beispielsweise mit der elektronischen Boardingkarte oder mit einem Mobiltelefon, Nachrichten austauschen. Hierdurch besteht für den Nutzer beziehungsweise den Passagier 2 die Möglichkeit, mit dem Gepäckausgabesystem 1 zu kommunizieren. Beispielsweise kann ein Nutzer 2 eine Anfrage an die Lokalisierungseinrichtung 1B richten, um festzustellen, welchem Ort die geplante Gepäckausgabe beziehungsweise an welchem Gepäckförderband die Gepäckausgabe stattfindet. Außerdem besteht für einen Passagier 2 die Möglichkeit der Lokalisierungseinrichtung 1B mitzuteilen, dass er die Ausgabe zu einem bestimmten späteren Zeitpunkt wünscht, wenn er vorher noch eine andere Tätigkeit erledigen möchte, beispielsweise ein Meeting besuchen oder Einkäufe tätigen. Der Passagier 2 kann nach Vornahme der Tätigkeit, beispielsweise zwei Stunden später, zu dem Gepäckförderband 1A gehen und pünktlich sein Gepäckstück 3 entgegennehmen. In der Zwischenzeit ist der Passagier 2 nicht durch das Herumtragen des Gepäcksstückes 3 belastet. Dies bietet insbesondere auch dem Flughafenbetreiber des Zielflughafens 6 den Vorteil, dass ein Passagier 2 die dort vorhandenen Dienstleistungen ohne Belastung durch das Gepäckstück 3 entspannt in Anspruch nehmen kann, indem er beispielsweise Einkäufe erledigt.

Bei einer weiteren Ausführungsform wird dem Nutzer beziehungsweise dem Passagier 2 auf einer Anzeigeeinheit des Gepäckausgabesystems 1 eine verbleibende Wartezeit für die Ausgabe eines zugehörigen Gepäckstücks 3 und ein Ausgabeort des Gepäckstücks 3 mitgeteilt. Bei dieser Ausführungsvariante ist der Passagier 2 zumindest nicht gezwungen, die ganze Zeit an einem Gepäckförderband 1A auf sein Gepäckstück 3 zu warten. Ferner kann das Gepäckausgabesystem 1 dem Passagier 2 zum Beispiel mitteilen, dass sein Gepäckstück 3 aufgrund einer hohen Verkehrsdichte an einem Gepäckförderband 1A erst in einer halben Stunde ausgegeben werden kann. Das gibt dem Passagier 2 sie Möglichkeit, in der Zwischenzeit unbesorgt andere Tätigkeiten auszuführen. Bei einer möglichen Ausführungsform tauscht die Lokalisierungseinrichtung 1B Nachrichten in einem Datenübertragungsprotokoll mit dem Passagier 2 über eine Benutzerschnittstelle des mitgeführten Gerätes 9 aus. Die Kommunikations- und Lokalisierungseinrichtung 1B kann eine Nachricht an das Gerät 9 mit einer gewissen Adresse an einen gewissen Passagier 2 schicken. Der Passagier 2 kann eine Nachricht beispielsweise durch einen Tastendruck auf einer Tastatur der Benutzerschnittstelle seines Gerätes auslösen und an das Gepäckausgabesystem 1 schicken. Das Gepäckausgabesystem 1 kann die Position eines Endgerätes 9 mit einer bestimmten Adresse abfragen oder die Position eines Passagiers 2 ermitteln. Darüber hinaus kann die Lokalisierungseinrichtung 1B erfassen, wenn ein mobiles Endgerät 9 beziehungsweise ein Passagier 2 einen gewissen räumlichen Bereich im Zielflughafen 6 betritt beziehungsweise verlässt. Das dem Flugpassagier 2 ausgehändigte Gerät beziehungsweise das von dem Flugpassagier 2 mitgeführten Gerät 9 teilt an einen Zielflughafen 6 dem Flugpassagier 2 mit, wann sein Gepäckstück 3 an einem Ausgabeförderband 1A ankommen wird. Dabei kann zum Beispiel durch eine Anzeige eines Mobilfunktelefons oder durch ein entsprechendes Alarmsignal dem Flugpassagier 2 z.B. minutengenau mitgeteilt werden, wann sein Gepäckstück 3 auf dem Gepäckförderband 1A erscheint. Hierdurch kann ein Gedränge von vielen Passagieren 2 an einem Gepäckförderband 1A vermieden werden. Alternativ wird das Gepäckstück 3 erst dann an dem Gepäckförderband 1A ausgegeben, wenn der entsprechende Passagier 2 an dem jeweiligen Gepäckförderband 1A steht. Hierdurch wird der Schutz vor Diebstahl erhöht.

Bei einer Ausführungsvariante werden Gepäckstücke 3 auf verschiedene Gepäckförderbänder 1A verteilt, zum Beispiel auf Basis von Name, Sitzplatz, Ticket-ID oder dergleichen. Beispielsweise werden die Gepäckstücke 3 der Businessklasse an einer anderen Gepäckförderband 1A ausgegeben als die Gepäckstücke 3 der Economyklasse, wobei die Passagiere 2, z.B. über das mitgeführte Gerät 9, über jeweilige ihnen zugeordnete Gepäckförderbänder 1A informiert werden.

Weitere Varianten des erfindungsgemäßen Gepäckausgabesystems 1 sind möglich. Beispielsweise kann die Gepäckausgabe gezielt erst bei einer Gepäckausgabeeinrichtung 1A erfolgen, die sich innerhalb eines Parkhauses oder innerhalb eines in der Nähe befindlichen Flughafenhotels befindet. Die gezielte Gepäckausgabe kann auf Grundlage der vorhandenen Lokalisierungsinformationen über das Gepäckstück 3 und über den zugehörigen Passagier 2 sowie auf Basis weiterer Informationen, etwa über den beim Abflug hinterlegten Parkplatz eines Wagens des Passagiers 2, erfolgen, wobei die Gepäckstücke 3 des Passagiers 2 derart transportiert werden, dass der Passagier 2 zu jeder Zeit seine Gepäckstücke 3 an einer gewünschten Gepäckausgabestelle beziehungsweise eine entsprechenden Gepäckausgabeeinrichtung 1A abholen kann. So überträgt die Lokalisierungseinrichtung 1B bei einer möglichen Ausführungsform regelmäßig Lokalisierungsupdates an eine Gepäckausgabestelle (PUSHlocation) des Gepäckausgabesystems 1. Am Gepäckausgabeband 1A wird das Gepäckstück 3 entweder explizit durch eine entsprechende Anforderung des Passagiers 2, etwa durch Drücken eines Knopfes am Endgerät 9, angefordert oder implizit durch einen Aufenthalt des Passagiers 2 in ein vorgegeben Ausgabebereich angefordert. Diese Ausführungsvariante hat den Vorteil, dass dezidierte Gepäckausgabebereiche nicht mehr benötigt werden und der Komfort für die Passagiere 2 stark gesteigert werden kann. Beispielsweise kann eine besondere Dienstleistung für First-Class Passagiere bereitgestellt werden, bei denen die Ausgabe des Gepäckstücks 3 an einem geparkten Wagen des Passagiers 2 oder in dessen Hotel erfolgt.

Die Übertragung der Verknüpfungsdaten von dem Abflugflughafen 5 zu dem Zielflughafen 6 erfolgt bei einer möglichen Ausführungsvariante über ein Netzwerk 10, wie in Fig. 1 dargestellt. Bei einer alternativen Ausführungsform erfolgt der Transport der Verknüpfungsinformationen in einem Speicher bzw. Datenträger in dem Transportfahrzeug 4.

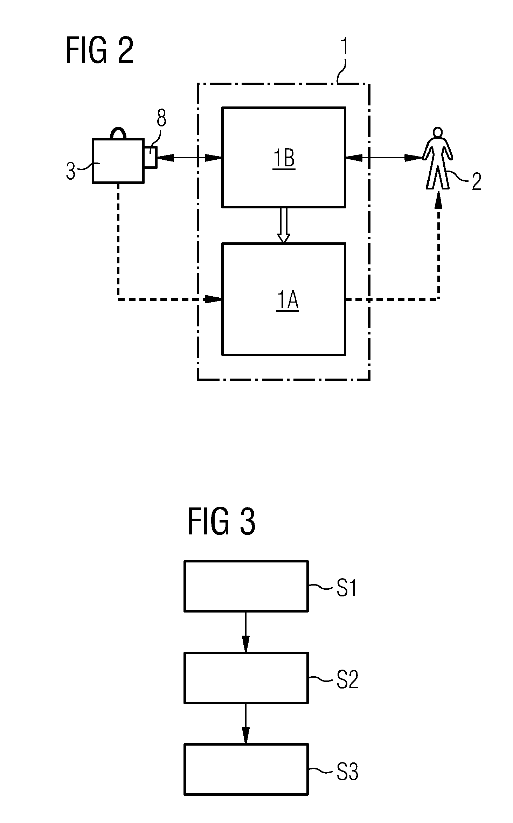

Figur 2 zeigt schematisch das erfindungsgemäße Gepäckausgabesystem 1. Das erfindungsgemäße Gepäckausgabesystem 1 ist nicht auf Flughäfen beschränkt. Es eignet sich auch für Gepäckstücke 2 die mit anderen Transportfahrzeugen transportiert werden, beispielsweise mit Passagierzügen, Passagierschiffen oder Passagierbussen. Darüber hinaus ist das erfindungsgemäße Gepäckausgabesystem 1 nicht auf transportierte Gepäckstücke 3 beschränkt, sondern kann auch für die Gepäckaufbewahrung, beispielsweise in einem Bahnhof eingesetzt werden.

Fig. 3 zeigt ein einfaches Ablaufdiagram einer möglichen Ausführungsform des erfindungsgemäßen Verfahrens zum gezielten Ausgeben eines Gepäckstückes 3.

In einem Schritt S1 wird das auszugebende Gepäckstück 3 anhand eines Tags 8, das an dem Gepäckstück 3 angebracht ist, lokalisiert.

In einem Schritt S2 werden Personen bzw. Passagiere 2 anhand von mindestens einem der jeweiligen Person zugeordneten Identifizierungsmerkmal lokalisiert. Dabei wird das Identifizierungsmerkmal bei einer Ausführungsvariante von einem von der Person 2 mitgeführten Gerät 9 abgeleitet, beispielsweise von einer Boardingkarte oder einem mobilen Telefon. Bei einer weiteren Ausführungsvariante wird das Identifizierungsmerkmal der Person 2 aus einem erfassten biometrischen Körpermerkmal der Person 2 abgeleitet, beispielsweise einem Fingerabdruck von einem oder mehreren Fingern der Person 2.

In einem weiteren Schritt S3 wird das lokalisierte Gepäckstück 3 der zu dem Gepäckstück 3 zugehörigen lokalisierten Person 2 zugeführt. Bei einer möglichen Ausführungsform des erfindungsgemäßen Verfahrens werden zur Ausgabe des Gepäckstücks 3 diejenigen Personen 2 innerhalb eines vorgegebenen Bereichs lokalisiert, die mit dem gleichen Passagiertransportfahrzeug 4 transportiert werden, wie das auszugebende Gepäckstück 3. Bei einer Vielzahl von Personen bzw. Passagieren 2 kann hierdurch die Lokalisierung beschleunigt werden.

Es bestehen verschiedene Möglichkeiten ein Tag 8 an einem Gepäckstück 3 zur späteren Identifizierung anzubringen.

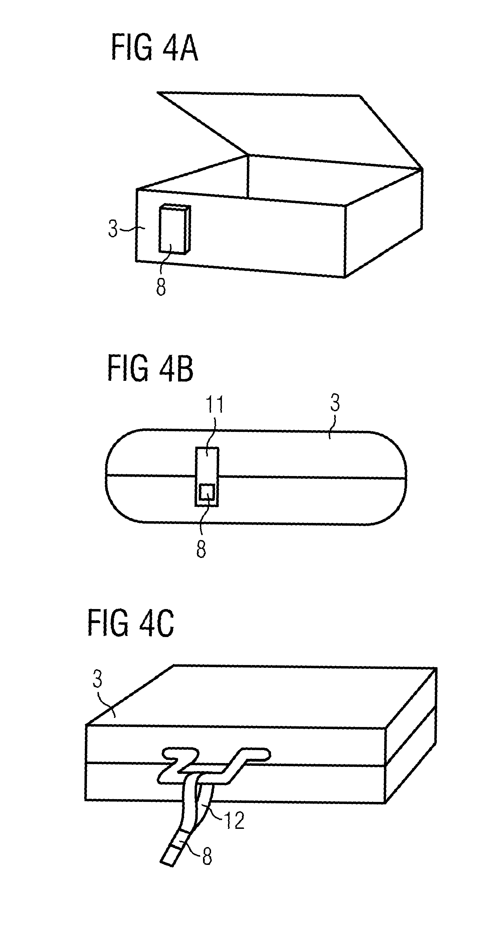

Figuren 4A, 4B, 4C zeigen verschiedene Ausführungsvarianten zum Anbringen eines Tags 8 an ein Gepäckstück 3. Bei den in den Fig. 4A bis 4C dargestelltem Gepäckstück 3 handelt es sich um einen Koffer.

Bei der in Figur 4A dargestellten Ausführungsvariante ist das Tag 8 an dem Gepäckstück 3 selbst angebracht, beispielsweise ist es in dem Gepäckstück 3 integriert. Alternativ kann das Tag 8 auch in den Koffer 3 hineingelegt werden.

Bei der in Figur 4B dargestellten Ausführungsvariante ist das Tag 8 an einem Versiegelungsband 11 angebracht, welches eine obere und eine untere Kofferschale versiegelt.

Bei der in Figur 4C dargestellten Ausführungsvariante ist das Tag 8 in einem Band 12 integriert, das in herkömmlicher Weise an einem Check-In-Schalter an dem Gepäckstück 3 angebracht wird.

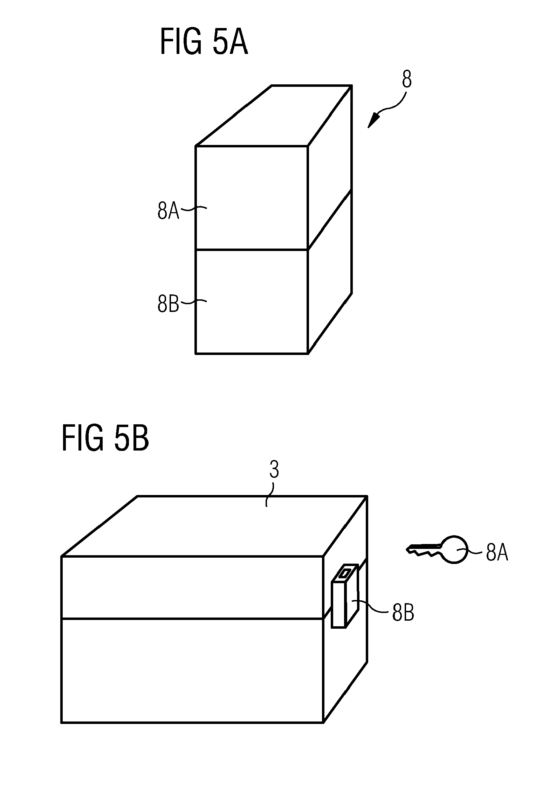

Bei einer weiteren Ausführungsvariante erhält der Nutzer 2 einen Teil eines teilbaren Tags, wie es in Fig. 5 dargestellt ist. Dabei bildet beispielsweise der obere Teil 8A des in Figur 5A dargestellten teilbaren Tags 8 ein von der Person 2 mitgeführtes Gerät 9, und der untere Teil 8B des teilbaren Tags 8 wird an dem Gepäckstück 3 angebracht. Bei einer möglichen Ausführungsform sind die beiden Teilstücke 8A, 8B des teilbaren Tags 8 durch eine Steckverbindung miteinander verbindbar. Der teilbare Tag 8 wird am Check-In-Schalter des Abflughafens 5 getrennt, wobei der Passagier 2 z.B. den oberen Teil 8A des teilbaren Tags 8 erhält und z.B. der untere Teil 8B des teilbaren Tags 8 an dem Gepäckstück 3 angebracht wird.

Bei einer möglichen Ausführungsvariante ist das in Fig. 5 dargestellte teilbare Tag 8 im Gepäckstück 3 integriert, wobei der Passagier 2 am Check-in-Schalter den oberen Teil 8A des teilbaren Tags 8 mitnimmt und während des Fluges mit sich führt. Der obere Teil 8A des teilbaren Tags 8 ist an dem Zielflughafen 6 durch die Lokalisierungseinrichtung 1B lokalisierbar. Das Gepäckstück 3, das mit dem unteren teilbaren Tagteil 8B versehen ist, wird dem Passagier 2 dann gezielt zugeführt.

Der obere Teil 8A des teilbaren Tags 8 kann beispielsweise in einem Schlüssel integriert sein, der in ein Schloss als unterer Teil 8B eines teilbaren Tags 8 hineingesteckt werden kann.

Bei einer möglichen Ausführungsvariante kann der Passagier 2 an dem Zielflughafen 6 den Schlüssel 8A zur Entgegennahme des Gepäckstücks 3 in das Schloss 8B des teilbaren Tags 8 hineinstecken, wobei automatisch ein Signal generiert wird, das die zielgerechte Entgegennahme des Gepäckstücks 3 signalisiert. Auf diese Weise kann die Lokalisierungseinrichtung 1B darüber Kenntnis erlangen, dass ein befugter Passagier 2 sein Gepäckstück 3 entgegengenommen hat. Dies bietet eine zusätzliche Sicherheit gegen ein unbefugtes Entnehmen von Gepäckstücken 3. Darüber hinaus besteht die Möglichkeit zu protokollieren, ob ein Passagier 2 ein Gepäckstück 3 entgegengenommen hat oder nicht.

## Patentansprüche

1. Gepäckausgabesystem (1) mit
mindestens einer Gepäckausgabeeinrichtung (1A) zur Ausgabe von Gepäckstücken (3) an Personen (2),
**dadurch gekennzeichnet, dass**
eine Lokalisierungseinrichtung (1B) vorgesehen ist, welche Gepäckstücke (3) anhand eines daran jeweils angebrachten Tags (8) und Personen (2) anhand mindestens eines der jeweiligen Person (2) zugeordneten Identifizierungsmerkmals lokalisiert,
wobei die Lokalisierungseinrichtung (1B) die Gepäckausgabeeinrichtung (1A) zur Zuführung des lokalisierten Gepäckstücks (3) zu einer zugehörigen lokalisierten Person (2) steuert.

2. Gepäckausgabesystem nach Anspruch 1,
wobei die Lokalisierungseinrichtung (1B) das Identifizierungsmerkmal einer Person (2) aus einem von der Person (2) mitgeführtem Gerät (9) ableitet.

3. Gepäckausgabesystem nach Anspruch 2,
wobei das von der Person (2) mitgeführte Gerät (9) ein mobiles Endgerät oder ein Tag ist.

4. Gepäckausgabesystem nach Anspruch 3,
wobei das mobile Endgerät (9) ein mobiles Telefon ist.

5. Gepäckausgabesystem nach Anspruch 2,
wobei das von der Person (2) mitgeführte Gerät (9) eine elektronische Boardingkarte ist.

6. Gepäckausgabesystem nach Anspruch 2 bis 5,
wobei das von der Person (2) mitgeführte Gerät (9) ein aktives oder ein passives RFID-Tag aufweist.

7. Gepäckausgabesystem nach Anspruch 1,
wobei die Lokalisierungseinrichtung (1B) das Identifizierungsmerkmal der Person (2) aus einem erfassten biometrischen Körpermerkmal der Person (2) ableitet.

8. Gepäckausgabesystem nach Anspruch 87,
wobei das erfasste biometrische Körpermerkmal ein erfasster Fingerabdruck der Person (2) ist.

9. Gepäckausgabesystem nach einem der vorangehenden Ansprüche 2-6,
wobei die Lokalisierungseinrichtung (1B) über eine drahtlose Schnittstelle mit dem von der Person (2) mitgeführten Gerät (9) Nachrichten austauscht.

10. Gepäckausgabesystem nach Anspruch 9,
wobei der Person (2) über eine Nutzerschnittstelle des mitgeführten Gerätes (9) oder über eine Anzeigeeinheit des Gepäckausgabesystems (1) eine verbleibende Wartezeit bis zur Ausgabe eines zugehörigen Gepäckstücks (3) und ein Ausgabeort eines zugehörigen Gepäckstücks (3) mitgeteilt wird.

11. Gepäckausgabesystem nach Ansprüchen 1-10,
wobei die Gepäcksausgabeeinrichtung (1A) die mit Tags (8) versehenen Gepäckstücke (3) von einem Passagier-Transportfahrzeug (4) zum Transport von Personen und Gepäckstücken oder von einer Gepäckaufbewahrungseinrichtung zur Aufbewahrung von Gepäckstücken (3) erhält.

12. Gepäckausgabesystem nach einem der vorangehenden Ansprüche 1-11,
wobei die Gepäcksausgabeeinrichtung (1A) ein Gepäckförderband aufweist.

13. Gepäckausgabesystem nach Anspruch 11,
wobei das Passagier-Transportfahrzeug (4)
- ein Passagierflugzeug,
- ein Passagierzug,
- ein Passagierschiff oder
- ein Passagierbus ist.

14. Verfahren zum gezielten Ausgeben eines Gepäckstücks (3) mit den Schritten:
a) Lokalisieren (S1) des auszugebenden Gepäckstücks (3) anhand eines Tags (8), das an dem Gepäckstück (3) angebracht ist;
b) Lokalisieren (S2) von Personen (2) anhand von mindestens einem der jeweiligen Person (2) zugeordneten Identifizierungsmerkmal; und
c) Zuführen (S3) des lokalisierten Gepäckstücks (3) zu einer zu dem Gepäckstück (3) zugehörigen lokalisierten Person (2).

15. Verfahren nach Anspruch 14,
wobei zur Ausgabe des Gepäckstücks (3) diejenigen Personen (2) innerhalb eines vorgegebenen Bereichs lokalisiert werden, die mit dem gleichen Passagier-Transportfahrzeug (4) transportiert werden, wie das auszugebende Gepäckstück (3).

16. Verfahren nach Anspruch 14 oder 15,
wobei das Identifizierungsmerkmal der Person (2) aus einem von der Person (2) mitgeführten Gerät (9) abgeleitet wird.

17. Verfahren nach Anspruch 14 oder 15,
wobei das Identifizierungsmerkmal der Person (2) aus mindestens einem erfassten biometrischen Körpermerkmal der Person (2) abgeleitet wird.

18. Computerprogramm mit Programmbefehlen zur Durchführung des Verfahrens nach Ansprüchen 15-1817.

19. Datenträger, der das Computerprogramm nach Anspruch 18 speichert.
